Europäisches Patentamt

European Patent Office

Office européen des brevets

(11) Numéro de publication: **0 247 581**
**A1**

## (12) DEMANDE DE BREVET EUROPEEN

(21) Numéro de dépôt: **87107672.5**

(22) Date de dépôt: **26.05.87**

(51) Int. Cl.⁴: **G 01 D 5/26**, G 01 K 11/00, G 01 K 1/16

(30) Priorité: **30.05.86 FR 8607818**

(43) Date de publication de la demande: **02.12.87**
**Bulletin 87/49**

(84) Etats contractants désignés: **DE FR GB NL SE**

(71) Demandeur: **COMPAGNIE GENERALE D'ELECTRICITE Société anonyme dite:, 54, rue La Boétie, F-75382 Paris Cedex 08 (FR)**

(72) Inventeur: **Tardy, André, 19, rue d'Arpajon, F-91520 Egly (FR)**
Inventeur: **Jurczyszyn, Michel, 68, rue Gabriel Péri, F-94200 Ivry sur Seine (FR)**

(74) Mandataire: **Weinmiller, Jürgen et al, Lennéstrasse 9 Postfach 24, D-8133 Feldafing (DE)**

(54) **Dispositif de mesure multipoint à fibre optique avec multiplexage temporel.**

(57) Vingt capteurs de température se succèdent sur une fibre de mesure. Ils réfléchissent chacun successivement une petite fraction de l'énergie d'une impulsion lumineuse d'interrogation parcourant cette fibre, la valeur de cette fraction permettant de connaître la température. Pour cela ils sont constitués chacun par un intervalle entre deux tronçons successifs (F2, F3) d'une fibre optique, cet intervalle étant rempli d'une colle transparente (36) dont l'indice optique varie avec la température.

L'impulsion d'interrogation est renvoyée seulement par le dioptre constitué par la face d'extrémité (38) du tronçon amont (F2) de la fibre.

Dispositif de mesure multipoint à fibre optique avec multiplexage
temporel.

La présente invention concerne la mesure d'une grandeur
physique, telle que la température ou la pression en des points qui se
succèdent le long d'une ligne de mesure.

Un premier dispositif pour réaliser une telle mesure est connu
par une communication à la Première Conférence Internationale sur les
Capteurs à Fibres Optiques (Optical fibre sensors) à Londres du 26 au
28 avril 1983, par E. Theocharous, "Differential Absorption
Distributed Thermometer" (IEE, conference publication number 221, p.
10-12).

Selon cette communication on envoie une brève impulsion
lumineuse d'interrogation dans une fibre optique. Des tronçons
successifs de cette fibre sont séparés par des plaques minces d'un
verre au rubis qui absorbe une composante spectrale de cette impulsion
dans une proportion plus ou moins grande selon la température, de
manière à constituer des capteurs. L'intensité de cette composante
transmise au tronçon de fibre en aval d'une telle plaque dépend donc de
la température de cette plaque. Il en est de même de la lumière rétrodiffusée par ce tronçon aval à partir de cette composante et la mesure
de l'intensité de cette lumière permet de connaître cette température. Par ailleurs, la mesure du temps entre l'envoi de l'impulsion
d'interrogation et la réception de la lumière rétrodiffusée permet,
compte tenu de la vitesse de propagation connue de la lumière dans la
fibre, de savoir de quel tronçon de la fibre provient cette lumière
rétrodiffusée, et donc d'affecter les différentes mesures de
températures aux différents capteurs.

Ce premier dispositif connu présente l'inconvénient qu'il ne
permet pas de conserver de bonnes précision et sensibilité de mesure
lorsque le nombre de capteurs, c'est à dire le nombre de points de
mesure, dépasse dix.

C'est pourquoi les présents inventeurs ont proposé un deuxième
dispositif comportant
- un corps d'émission-réception (2),

- un générateur d'impulsions lumineuses d'interrogation (4, 6) disposé dans ce corps,

- une fibre optique (F) disposée selon ladite ligne et transmettant la lumière à une vitesse de propagation connue, une extrémité de cette fibre étant raccordé à ce corps pour recevoir lesdites impulsions d'interrogation, cette fibre guidant ces impulsions tout en renvoyant sur toute sa longueur vers ce corps un signal lumineux de rétrodiffusion,

- des capteurs (C1, C2, C3....C20) disposés respectivement aux dits points de mesure successifs, chacun de ces capteurs comportant un intervalle transparent entre deux tronçons amont (F2) et aval (F3) de cette fibre et comportant aussi des moyens de maintien d'alignement de ces deux tronçons pour transmettre chaque dite impulsion d'interrogation de ce tronçon amont vers ce tronçon aval et les capteurs suivants, de sorte qu'un signal de rétrodiffusion est renvoyé par tous les tronçons successifs de cette fibre, cette fibre et ces capteurs constituant ladite ligne de mesure, une surface dioptrique de renvoi formée par une face d'extrémité (38) de l'un des deux dits tronçons amont (F2) et aval (F3), cette face étant perpendiculaire à la longueur de ladite fibre (F) pour répondre à ladite impulsion d'interrogation en renvoyant vers ledit corps une impulsion de réflexion (P2), cet intervalle étant occupé par un milieu sensible (36) qui présente un indice optique sensible à ladite grandeur physique à mesurer pour que le coefficient de réflexion de cette surface dioptrique et l'intensité de cette impulsion de réflexion dépendent de la valeur de cette grandeur,

- et un circuit de réception (16, 18, 20) comportant un détecteur de lumière (16) disposé dans ledit corps (2) pour recevoir ladite lumière renvoyée vers ce corps, pour en mesurer l'intensité au cours du temps, pour élaborer à partir de l'intensité desdites impulsions de réflexion des signaux de mesure représentatifs des valeurs de ladite grandeur physique, et pour faire correspondre ces signaux de mesure respectivement auxdits capteurs selon les temps auxquels ces impulsions de réflexion ont été reçues par ce détecteur.

Ce dispositif est évoqué dans le "Recueil des Communications" édité par la SPIE, P.O. Box 10 Bellingham, Washington 98227-0010 USA sur les "Applications Industrielles des Capteurs à des Fibres Optiques", communication faite par André Tardy.

La présente invention a notamment pour but de permettre de réaliser de manière simple et fiable un dispositif analogue à ce deuxième dispositif, tout en lui conférant une bonne sensibilité et une bonne précision.

Le dispositif selon l'invention est caractérisé par le fait que ledit milieu sensible est une colle optique (36) durcissable à partir d'un état antérieur liquide et adhérant aux deux dits tronçons amont (F2) et aval (F3).

On adopte de plus de préférence, les dispositions suivantes :

- un segment extrême de chacun desdits tronçons amont (F2) et aval (F3) s'étend dans un tube d'alignement (34) qui constitue lesdits moyens de maintien d'alignement et qui est rempli par ladite colle optique (36), ce tube présentant un diamètre peu supérieur à celui de ladite fibre optique (F), ces deux tronçons étant disposés dans ce tube au contact d'une même génératrice de celui-ci en laissant entre eux ledit intervalle, de manière à permettre une réalisation facile des dits capteurs.

- Ladite colle optique (36) est d'un type durcissable sous l'action d'un rayonnement, tel qu'un rayonnement ultraviolet, et ledit tube d'alignement (34) est constitué d'un verre tel qu'un verre de silice transparent à ce rayonnement.

- Lorsque la grandeur à mesurer est la température, ledit tube d'alignement (34) présente une paroi mince pour laisser facilement passer la chaleur, et est disposé dans un raccord à paroi épaisse (42) constitué d'un métal thermiquement conducteur, avec liaison par un milieu (44) thermiquement non isolant, de manière à transmettre la température extérieure jusqu'au dit milieu sensible (36) dans ledit intervalle entre tronçons amont (F2) et aval (F3) tout en conférant une résistance mécanique au capteur.

- Ledit raccord métallique (42) possède deux embouts (46) pour recevoir et fixer des gaines mécaniques externes thermiquement non bonnes conductrices (32) de deux tronçons amont et aval d'un câble optique (14) contenant les deux dits tronçons (14) amont (F2) et aval (F3) de la fibre optique (F), respectivement, de manière à assurer la continuité de la résistance mécanique de ladite ligne de mesure.

- Par ailleurs ledit circuit de réception (16, 18, 20) comporte un circuit de traitement (20) qui élabore ledit simple signal de mesure correspondant à un dit capteur (C2) en faisant le rapport de l'intensité de ladite impulsion de réflexion (V P2) à l'intensité (VM2) d'un signal de référence constituée par ledit signal de rétrodiffusion reçu peu avant cette impulsion, c'est-à-dire en provenance dudit

tronçon amont (F2) par rapport à ce capteur, de manière que ce signal de mesure ne soit pas modifié par une perturbation affectant éventuellement ladite ligne de mesure à distance de ce capteur.

- La différence relative des indices optiques des deux milieux (F2, 36) de part et d'autres de ladite surface dioptrique de renvoi (38) est comprise entre 0,3 millièmes et 10 millièmes environ pour que ledit coefficient de réflexion soit compris entre 0,3 dix millièmes et 1 millième environ et que l'intensité de crête propre à ladite impulsion de réflexion (P2) soit voisine du double de celle dudit signal de référence (VM2), cette impulsion se superposant au signal de rétrodiffusion (VP2) concommitant en faisant donc apparaître une intensité résultante triple de celle du signal de référence, ces intensités étant mesurées dans ledit circuit de réception (16, 18, 20), (VM2), de manière à conférer une bonne sensibilité du dispositif.

- La fibre optique (F) est une fibre multimode à gradient d'indice et ledit générateur d'impulsion d'interrogation comporte un émetteur laser à semi conducteur (6) émettant sur une longueur d'onde de 0,85 micromètres environ.

- Le générateur d'impulsion (4, 6) émet des impulsions d'interrogation récurrentes de largeur inférieure à 100 nanosecondes et de préférence voisine de 10 nanosecondes, et ledit détecteur de lumière est constitué par une photodiode semi-conductrice à avalanche (16).

- Les valeurs du coefficient de réflexion de ladite surface dioptrique de renvoi sont choisies faibles de manière que l'énergie de ladite impulsion d'interrogation et les énergies desdites impulsions de réflexion soient peu diminuées à la traversée de chaque dit capteur et que le nombre de ces capteurs puisse donc être choisi grand sans affecter la précision et la sensibilité de la mesure.

- Ladite impulsion d'interrogation est brève de manière que l'impulsion de réflexion soit elle aussi brève et que la petitesse de la durée sur laquelle l'énergie de cette impulsion de réflexion est répartie permette au dit circuit de réception de la mesurer avec précision malgré la présence dudit signal de rétrodiffusion et malgré le fait que cette énergie présente une faible valeur résultant de la faible valeur dudit coefficient de réflexion.

Le nombre desdits capteurs (C1, C2, C3....C20) est au moins égal à quatre et de préférence à dix et par exemple voisin de vingt.

Les signes de référence placés ci-dessus entre parenthèses renvoient à titre purement illustratif aux figures schématiques ci-jointes et on va se référer ci-après à ces mêmes figures pour décrire plus particulièrement, mais à simple titre d'exemple et de manière non limitative, comment la présente invention peut être mise en oeuvre. Lorsqu'un même élément apparaît sur plusieurs figures il y est désigné par le même signe de référence.

La figure 1 représente une vue d'ensemble d'un dispositif selon la présente invention.

La figure 2 représente une vue d'un capteur de ce dispositif en coupe par un plan passant par l'axe de ce capteur.

La figure 3 représente un détail III de la figure 2 à échelle agrandie.

La figure 4 représente une vue de ce même capteur à la même échelle agrandie en coupe par un plan IV-IV de la figure 3, ce plan étant perpendiculaire à l'axe de ce capteur.

La figure 5 est un diagramme représentant la variation de la puissance lumineuse renvoyée dans le circuit de réception de ce même capteur, en fonction du temps porté en abcisses.

Le dispositif décrit à titre d'exemple présente l'ensemble des dispositions décrites ci-dessus.

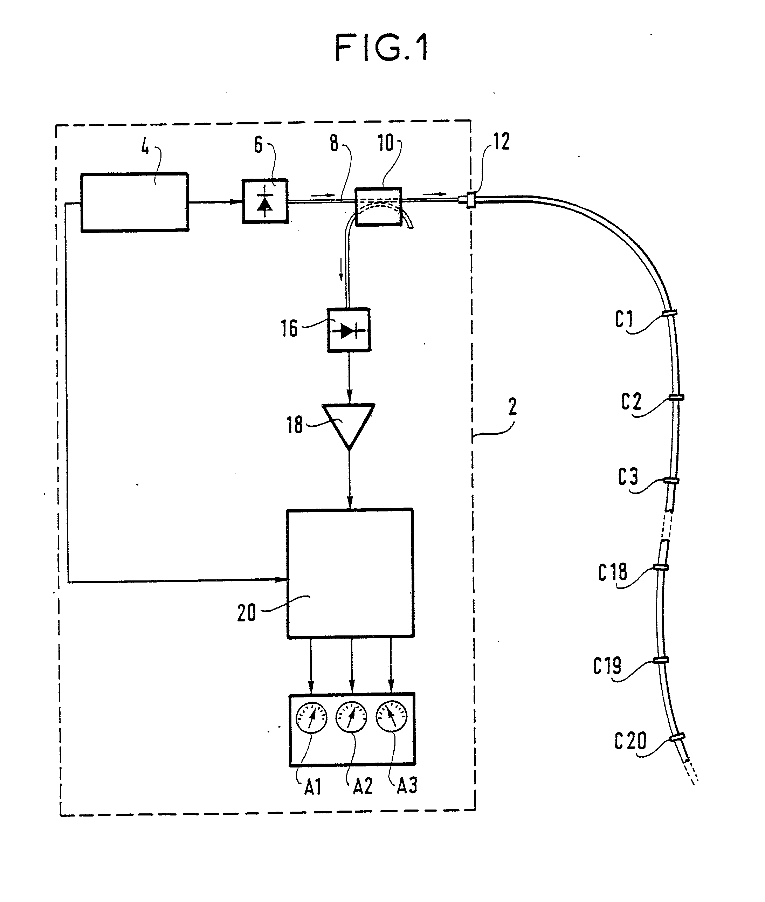

Conformément à la figure 1 il comporte un corps d'émission-réception 2 qui comporte lui-même un générateur d'impulsions électriques 4 fournissant des impulsions de durée 10 ns se succédant à une fréquence de 1 KHz. Ce générateur alimente une diode laser semi-conductrice 6 qui injecte les impulsions lumineuses d'interrogation précédemment mentionnée dans un tronçon de fibre 8 intérieur au corps 2. La longueur d'onde est de 0,83 micromètre.

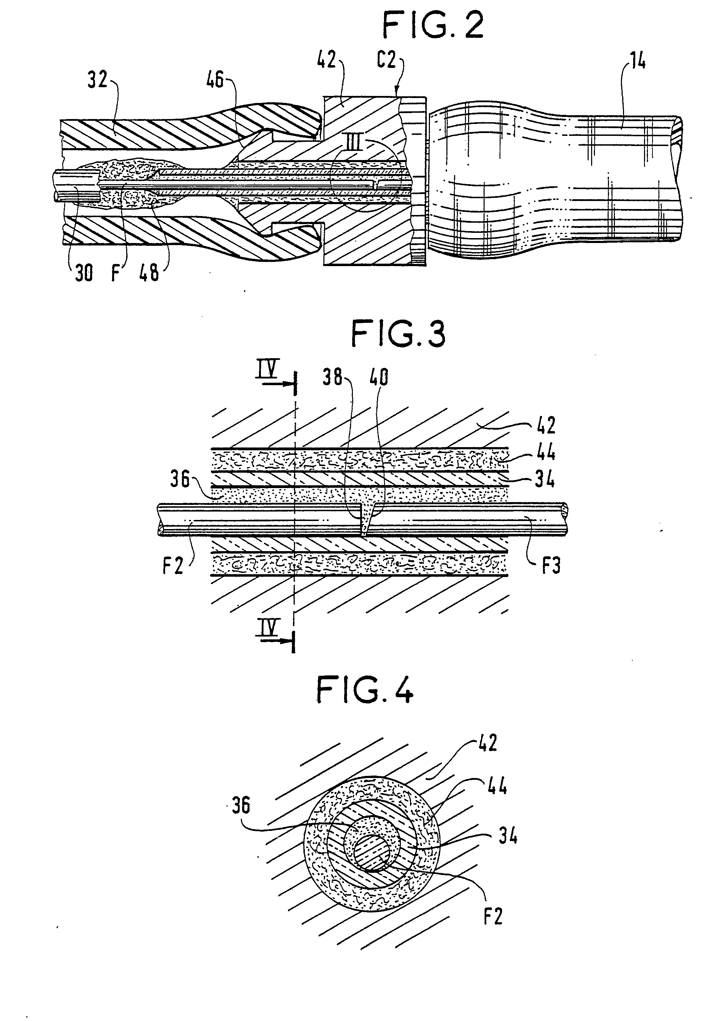

Ce tronçon intérieur 8 traverse un coupleur unidirectionnel de réception 10 dont le rôle sera précisé plus loin et parvient à un connecteur 12 situé sur la paroi d'un boîtier contenant le corps 2. Ce connecteur injecte les impulsions d'interrogation dans une ligne de mesure constituée par un câble optique 14 contenant une fibre optique F (Fig. 2) séparée en tronçons successifs tels que F2 et F3 (Fig. 3) par vingt capteurs successifs C1, C2, C3.... C18, C19 et C20. Chacun de ces tronçons a par exemple une longueur de 5 m.

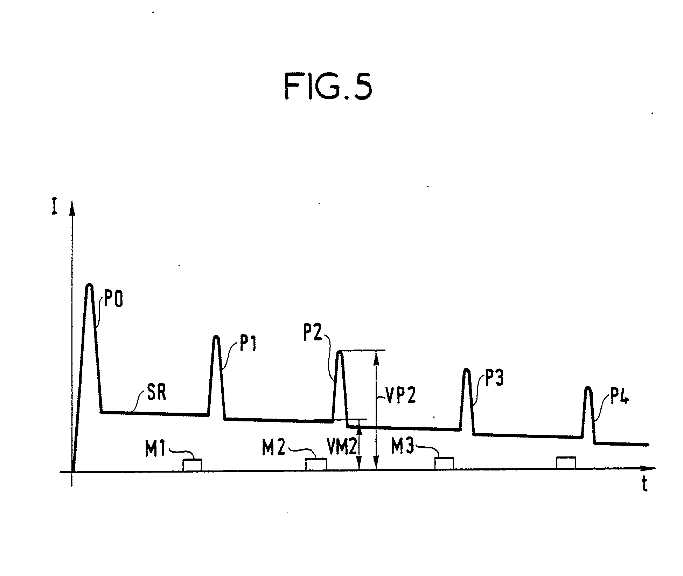

La lumière rétrodiffusée renvoyée par cette fibre et les impulsions lumineuses de réflexion renvoyée par ces capteurs dans cette fibre sont reçues dans le corps 2 à travers le connecteur 12. Elles parviennent au coupleur unidirectionnel 10, qui les transmet à une photodiode semi-conductrice à avalanche 16. Celle-ci fournit en réponse en signal électrique de réception représentatif de la puissance lumineuse reçue à chaque instant. Ce signal est amplifié dans un amplificateur 18 et reçu dans un circuit de traitement 20. Cette puissance (ou ce signal) est représenté sur la fig. 5. Il comporte, après chaque émission d'une impulsion d'interrogation, une impulsion initiale parasite Po résultant du caractère non parfaitement unidirectionnel du coupleur et une succesion d'impulsions de réflexion telles que P1, P2 , P3, 10 etc... jusqu'à P20 reçues chacune d'un capteur correspondant C1, C2, C3 etc jusqu'à C20. Entre ces impulsions le signal de réception est un signal de rétrodiffusion SR résultant de la rétrodiffusion de la lumière de l'impulsion d'interrogation par la fibre. L'intensité de ces impulsions et de ce signal décroît lentement jusqu'à l'impulsion P20. Cette décroissance résulte surtout du fait que l'énergie de l'impulsion d'interrogation est partiellement perdue dans les capteurs successifs en raison des défauts d'alignement des tronçons succesifs, et accessoirement par atténuation dans la fibre F. La perte d'énergie par réflexions est relativement négligeable.

Le circuit 20 est déclenché par chaque impulsion d'interrogation émise par le générateur 4 et il est apte à reconnaître les impulsions telle que PO, P1, etc....

A un temps prédéterminé après chacune des impulsions P0, P1, P2, et.... il engendre une impulsion ou fenêtre de mesure telle que M1, M2 ou M3. Ce temps est choisi, compte tenu de la vitesse de propagation de la lumière de la fibre F, de manière que cette fenêtre de mesure précède de peu, par exemple de 20 nanosecondes, une impulsion de réflexion correspondante telle que P0, P1, P2 ou P3. Dans chacune de ces fenêtres de mesure, par exemple M2, le circuit 20 enregistre la valeur, par exemple VM2, du signal de rétrodiffusion SR. Par ailleurs il mesure la valeur, par exemple VP2, de l'impulsion de réflexion, par exemple P2, qui suit cette fenêtre.

Et il calcule le rapport de ces deux valeurs pour fournir un signal de mesure par exemple SM2, non représenté, qui vaut SM2 = VP2/VM2.

Les capteurs sont choisis de manière que, au moins lorsqu'on désire une sensibilité la plus grande possible, ce rapport vaille environ 3, étant entendu qu'il varie selon la température des capteurs. Après chaque impulsion d'interrogation le circuit de traitement 20 enregistre chacune des valeurs telles que SM1, SM2, SM3 etc... du signal de mesure correspondant chacune à un capteur tel que C1, C2, C3, etc....

Après l'envoi de plusieurs impulsions d'interrogation il calcule pour chaque capteur tel que C2 la moyenne des valeurs du signal de mesure tel que SM2 correspondant à ce capteur et affiche cette moyenne sur un dispositif d'affichage tel que A2 correspondant à ce capteur, étant entendu qu' à chaque capteur tel que C1, C2, C3 etc... correspond un dispositif d'affichage tel que A1, A2, A3 etc...

La photodiode 16, l'amplificateur 18, et le circuit 20 constituent le circuit de réception précédemment mentionné.

La fibre optique à gradient d'indice F (fig. 2) comporte un coeur et une gaine optiques qui ne sont pas distingués sur les figures. Elle est entourée par une gaine plastique de fibre 30 et le câble optique 14 est constitué en la disposant dans une gaine de câble 32 présentant une bonne résistance mécanique.

Pour constituer un capteur tel que C2 la fibre est coupée en deux tronçons amont tel que F2 et aval tel que F3 (Fig. 3). Ces deux tronçons sont disposés dans un tube d'alignement 34 contre une même génératrice de ce tube, qui est constitué d'un verre de silice transparent aux ultra-violets, et présente un diamètre intérieur de 0,25 mm un diamètre extérieur de 0,40 mm et de longueur de 2,5 mm.

Ce tube est rempli d'une colle optique 36 telle que les polyuréthanes acryliques et les époxydes acryliques.

Cette colle adhère à ce tube et à ces tronçons et présente un indice optique qui décroit d'un dix millième environ quand la température s'élève d'un degré Celsius , et qui vaut 1,495 à température moyenne (50° C) alors que le coeur de la fibre F présente un indice de 1,49. Cette colle a été introduite à l'état liquide et polymérisée par rayonnement ultraviolet à travers la paroi du tube 34.

L'extrémité 38 du tronçon amont F2 a été coupé par clivage de manière à être aussi près que possible d'un plan perpendiculaire à la fibre et à constituer ladite surface dioptrique de renvoi. L'extrémité 40 du tronçon aval a été coupée de manière plus grossière selon un plan incliné par exemple de 20 degrés par rapport au plan perpendiculaire à l'axe de la fibre. La colle 36 contenue dans l'intervalle entre ces deux faces d'extrémités constitue le milieu sensible précédemment mentionné.

Le tube 34 est disposé avec un léger jeu dans un alésage formé dans l'axe d'un raccord 42 constitué de cuivre massif et il y est collé par une colle epoxide thermiquement conductrice. Ce raccord présente un diamètre extérieur un peu supérieur au diamètre courant du câble 14. Il comporte deux embouts crantés longitudinalement opposés tels que 46 pour recevoir les extrémités de deux tronçons de la gaine 32 du câble 14 et assurer la continuité de la résistance mécanique de ce câble, notamment en traction.

Les deux extrémités du tube d'alignement 34 sont réunies aux deux extrémités de la gaine plastique de fibre 30 par deux plots de résine tels que 48.

Le dispositif ainsi constitué est notamment utilisable pour la surveillance d'un massif de charbon dans une mine.

REVENDICATIONS

1/ Dispositif de mesure multipoint à fibre optique avec multiplexage temporel destiné à mesurer les valeurs que prend une grandeur physique en des points de mesure qui se succèdent le long d'une ligne de mesure,

- ce dispositif comportant un corps d'émission-réception (2),

- un générateur d'impulsions lumineuses d'interrogation (4,6) disposé dans ce corps,

- une fibre optique (F) disposée selon ladite ligne et transmettant la lumière à une vitesse de propagation connue, une extrémité de cette fibre étant raccordé à ce corps pour recevoir lesdites impulsions d'interrogation, cette fibre guidant ces impulsions tout en renvoyant sur toute sa longueur vers ce corps un signal lumineux de rétrodiffusion,

- des capteurs (C1, C2, C3....C20) disposés respectivement aux dits points de mesure successifs, chacun de ces capteurs comportant un intervalle transparent entre deux tronçons amont (F2) et aval (F3) de cette fibre et comportant aussi des moyens de maintien d'alignement de ces deux tronçons pour transmettre chaque dite impulsion d'interrogation de ce tronçon amont vers ce tronçon aval et les capteurs suivants, de sorte qu'un signal de rétrodiffusion est renvoyé par tous les tronçons successifs de cette fibre, cette fibre et ces capteurs constituant ladite ligne de mesure, une surface dioptrique de renvoi formée par une face d'extrémité (38) de l'un des deux dits tronçons amont (F2) et aval (F3), cette face étant perpendiculaire à la longueur de ladite fibre (F) pour répondre à ladite impulsion d'interrogation en renvoyant vers ledit corps une impulsion de réflexion (P2), cet intervalle étant occupé par un milieu sensible (36) qui présente un indice optique sensible à ladite grandeur physique à mesurer pour que le coefficient de réflexion de cette surface dioptrique et l'intensité de cette impulsion de réflexion dépendent de la valeur de cette grandeur,

- et un circuit de réception (16, 18, 20) comportant un détecteur de lumière (16) disposé dans ledit corps (2) pour recevoir ladite lumière renvoyée vers ce corps, pour en mesurer l'intensité au cours du temps, pour élaborer à partir de l'intensité desdites impulsions de réflexion des signaux de mesure représentatifs des valeurs de ladite grandeur physique, et pour faire correspondre ces signaux de mesure respectivement auxdits capteurs selon les temps auxquels ces impulsions de réflexion ont été reçues par ce détecteur,

- ce dispositif étant caractérisé par le fait que ledit milieu sensible est une colle optique (36) durcissable à partir d'un état antérieur liquide et adhérant aux deux dits tronçons amont (F2) et aval (F3).

2/ Dispositif selon la revendication 1, ce dispositif étant caractérisé par le fait qu'un segment extrême de chacun desdits tronçons amont (F2) et aval (F3) s'étend dans un tube d'alignement (34) qui constitue lesdits moyens de maintien d'alignement et qui est rempli par ladite colle optique (36), ce tube présentant un diamètre peu supérieur à celui de ladite fibre optique (F), ces deux tronçons étant disposés dans ce tube au contact d'une même génératrice de celui-ci en laissant entre eux ledit intervalle, de manière à permettre une réalisation facile des dits capteurs.

3/ Dispositif selon la revendication 2, caractérisé par le fait que ladite colle optique (36) est d'un type durcissable sous l'action d'un rayonnement, tel qu'un rayonnement ultraviolet, et en outre par le fait que ledit tube d'alignement (34) est constitué d'un verre tel qu'un verre de silice transparent à ce rayonnement.

4/ Dispositif selon la revendication 3, caractérisé par le fait que ladite colle optique est une résine polyuréthane acrylique.

5/ Dispositif selon la revendication 3, caractérisé par le fait que ladite colle optique est une résine époxyde acrylique.

6/ Dispositif selon la revendication 2, dans lequel ladite grandeur à mesurer est la température, et caractérisé par le fait que ledit tube d'alignement (34) présente une paroi mince pour laisser facilement passer la chaleur, et est disposé dans un raccord à paroi épaisse (42) constitué d'un métal thermiquement conducteur, avec liaison par un milieu (44) thermiquement non isolant, de manière à transmettre la température extérieure jusqu'au dit milieu sensible (36) dans ledit intervalle entre tronçons amont (F2) et aval (F3) tout en conférant une résistance mécanique au capteur.

7/ Dispositif selon la revendication 6, caractérisé par le fait que ledit raccord métallique (42) possède deux embouts (46) pour recevoir et fixer des gaines mécaniques externes thermiquement non bonne conductrice (32) de deux tronçons amont et aval d'un câble optique (14) contenant les deux dits tronçons (14) amont (F2) et aval (F3) de la fibre optique (F), respectivement, de manière à assurer la continuité de la résistance mécanique de ladite ligne de mesure.

8/ Dispositif selon la revendication 1, caractérisé par le fait que ledit circuit de réception (16, 18, 20) comporte un circuit de traitement (20) qui élabore ledit simple signal de mesure correspondant à un dit capteur (C2) en faisant le rapport de l'intensité de ladite impulsion de réflexion (V P2) à l'intensité (VM2) d'un signal de référence constituée par ledit signal de rétrodiffusion reçu peu avant cette impulsion, c'est-à-dire en provenance dudit

tronçon amont (F2) par rapport à ce capteur, de manière que ce signal de mesure ne soit pas modifié par une perturbation affectant éventuellement ladite ligne de mesure à distance de ce capteur.

9/ Dispositif selon la revendication 8, caractérisé par le fait que la différence relative des indices optiques des deux milieux (F2, 36) de part et d'autres de ladite surface dioptrique de renvoi (38) est comprise entre 0,3 millièmes et 10 millièmes environ pour que ledit coefficient de réflexion soit compris entre 0,3 dix millièmes et 1 millième environ et que l'intensité de crête propre à ladite impulsion de réflexion (P2) soit voisine du double de celle dudit signal de référence (VM2), cette impulsion se superposant au signal de rétrodiffusion (VP2) concommitant en faisant donc apparaître une intensité résultante triple de celle du signal de référence, ces intensités étant mesurées dans ledit circuit de réception (16, 18, 20), (VM2), de manière à conférer une bonne sensibilité du dispositif.

10/ Dispositif selon la revendication 1 caractérisé par le fait que ladite fibre optique (F) est une fibre multimode à gradient d'indice et ledit générateur d'impulsion d'interrogation comporte un émetteur laser à semi conducteur (6) émettant sur une longueur d'onde de 0,85 micromètres environ.

11/ Dispositif selon la revendication 1, caractérisé par le fait que ledit générateur d'impulsion (4, 6) émet des impulsions d'interrogation récurrentes de largeur inférieure à 100 nanosecondes et de préférence voisine de 10 nanosecondes, et ledit détecteur de lumière est constitué par une photodiode semi-conductrice à avalanche (16).

# FIG.1

## FIG. 2

## FIG. 3

## FIG. 4

FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,Y | CA-A-1 185 469 (J. STRAUS et al.) <br> * Figures; titre; page 2, ligne 7 - page 6, ligne 4 * | 1-7 | G 01 D    5/26 <br> G 01 K   11/00 <br> G 01 K    1/16 |
| | --- | | |
| X,Y | WO-A-8 404 439 (CENTRAL ELECTRICITY GENERATING BOARD) <br> *      Titre;       figures 1,7,8,10,11,15,17; page 17, ligne 1 - page 18, ligne 3; page 23, ligne 4 - page 24, ligne 16; page 25, ligne 3 - page 27, ligne 8; page 32, ligne 33 - page 34, ligne 23; page 38, ligne 3 - page 39, ligne 10 * | 1,2,6-8,11 | |
| | --- | | |
| Y | DE-A-2 639 120 (B. HERMANS et al.) <br> * Figures 1-7; en entier * | 1,2 | |
| | --- | | DOMAINES TECHNIQUES RECHERCHES (Int. Cl.4) |
| Y | FR-A-2 439 393 (HONEYWELL INC.) <br> * Figures 1-5; en entier * | 1,2 | G 01 D <br> G 01 K <br> G 01 L <br> G 02 B <br> H 04 B |
| | ----- | | |

Le présent rapport de recherche a été établi pour toutes les revendications

| Lieu de la recherche <br> LA HAYE | Date d'achevement de la recherche <br> 07-09-1987 | Examinateur <br> VISSER F.P.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié a la date de dépôt ou après cette date
D : cité dans la demande
L : cité pour d'autres raisons

& : membre de la même famille. document correspondant

OEB Form 1503 03 82